**Europäisches Patentamt**

**European Patent Office**

**Office européen des brevets**

(11) Veröffentlichungsnummer: **0 308 950 B1**

# EUROPÄISCHE PATENTSCHRIFT

(45) Veröffentlichungstag der Patentschrift: **17.03.93**

(51) Int. Cl.5: **C04B 24/02**

(21) Anmeldenummer: **88115639.2**

(22) Anmeldetag: **23.09.88**

(54) **Mittel zur Reduzierung des Schwundmasses von Zement.**

(30) Priorität: **24.09.87 DE 3732114**

(43) Veröffentlichungstag der Anmeldung:
**29.03.89 Patentblatt 89/13**

(45) Bekanntmachung des Hinweises auf die
Patenterteilung:
**17.03.93 Patentblatt 93/11**

(84) Benannte Vertragsstaaten:
**AT BE CH DE ES FR GB IT LI NL SE**

(56) Entgegenhaltungen:
**FR-A- 2 537 458**
**US-A- 1 975 485**
**US-A- 2 364 555**
**US-A- 2 593 008**

**CHEMICAL ABSTRACTS, Band 79, Nr. 8, 22
Oktober 1974, Seite 275, Ref.Nr. 96272y, Columbus, Ohio, US; & JP-A-73 43 014 (KOKAI
K.K.) 22-06-1973**

**CHEMICAL ABSTRACTS, Band 101, Nr. 20,
November 1984, Seite 317, Ref.Nr. 176465y,
Columbus, Ohio, US; & JP-A-59 128 240
(KOKAI TOKKYO KOHO) 24-07-1984**

**CHEMICAL ABSTRACTS, Band 101, Nr. 26,**

**Dezember 1984, Seite 250, Ref.Nr. 234683f,
Columbus, Ohio, US; & JP-A-59 131 552
(KOKAI TOKKYO KOHO) 28-07-1984**

(73) Patentinhaber: **WACKER-CHEMIE GMBH
Hanns-Seidel-Platz 4
W-8000 München 83(DE)**

(72) Erfinder: **Schulze, Joachim, Dr.
Rudolf-Diesel-Strasse 2
W-8263 Burghausen(DE)**
Erfinder: **Baumgartl, Horst
Bergstrasse 1
W-8347 Kirchdorf(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft die Verwendung von Alkandiolen als Additive zur Reduzierung des Schwundmaßes von Zement.

Eine der negativen Eigenschaften von Zement, insbesondere des zumeist benutzten Portlandzements, stellt das Schrumpfen oder Schwinden der hydraulisch abbindenden Massen dar, das zu Volumenänderungen der abbindenden Mörtel oder Betone führt. Werden diese Volumenänderungen zu groß, kann das zur Rißbildung in den Baustoffen führen. Man ist daher bestrebt, die Schwindneigung möglichst klein zu halten.

Nach Soroka (Portland Cement Paste and Concrete, Chemicals Publishing Co. Inc.) kann man das Schwinden über den Wasserzementfaktor vermindern - je weniger Wasser man benutzt, um so geringer wird das Schwundmaß (S. 109). Eine andere Möglichkeit besteht darin, den Zementgehalt im Mörtel zu reduzieren (Czernin, Zementchemie für Bauingenieure, Bauverlag, S. 103).

Im Concrete Admixtures Handbook von V.S. Rachmandran wird der positive Einfluß von $Na_2SO_4$ auf das Schwinden von Zement beschrieben (Noyes Publication S. 75). In der DE-A 22 12 843 wird das Schwundmaß von Spachtelmassen auf Basis von Portlandzement durch Zugabe von Tonerdeschmelzzement und Gips verringert, so daß rißfreie Oberflächen entstehen. In der EP-A2 116524 wird die Verwendung von Gips zur Reduzierung des Schwindens beansprucht. Nachteilig bei dieser Verfahrensweise ist, daß bei der Verwendung von Gips in Kombination mit Portlandzement immer die Gefahr des Gipstreibens besteht, wobei die gesamte Festigkeit des Baustoffes verlorengehen kann (Czernin, Zementchemie für Bauingenieure, Bauverlag).

In der JP-A-73 43 014 (C.A. 79: 96272v) wird vorgeschlagen, sekundäre oder tertiäre Alkohole, speziell Glycerin, zementhaltigen Massen zur Vermeidung des Schrumpfens zuzusetzen. Nachteilig bei Verwendung dieser Verbindungen als Zementzusatz ist jedoch die sehr starke Verzögerung der Abbindung der hydraulischen Massen, die ihren Grund in dem hygroskopischen Verhalten dieser Verbindungen hat.

In der JP-A-59 128 240 (C.A. 101: 176465y) sind Polyoxyethylenether mit einer endständigen OH-Gruppe als Schwundmaß-reduzierende Zusätze in Gemischen mit Fluorhaltigen Emulgatoren beschrieben.

Es bestand daher die Aufgabe, Mittel zur Minderung des Schwindens von Zement zur Verfügung zu stellen, die die vorstehend beschriebenen Nachteile nicht aufweisen und sich mit anderen Zusatzmitteln wie zum Beispiel Dispersionen oder Dispersionspulver dem zementhaltigen Baustoff zusetzen lassen, ohne deren Wirksamkeit zu beeinträchtigen. Als Baustoffe, die Zement enthalten, werden im Rahmen dieser Anmeldung solche bezeichnet, die zumindest in Anteilen Portlandzement enthalten.

Gegenstand der Erfindung ist die Verwendung von Alkandiolen mit endständigen OH-Gruppen der allgemeinen Formel $C_nH_{2n}(OH)_2$ mit $5 \leq n \leq 10$, in Mengen von 0,1 bis 20 Gew.%, bezogen auf den Portlandzementanteil, als Zusatzmittel zur Verminderung des Schwindens von Portlandzement enthaltenden Baustoffen.

Vorzugsweise wird aus der Gruppe der Alkandiole mit endständigen OH-Gruppen der allgemeinen Formel $C_2H_{2n}(OH)_2$ mit $5 \leq n \leq 10$ das 2,2-Dimethylpropan-1,3-diol eingesetzt. Die Alkandiole mit endständigen OH-Gruppen und das besonders bevorzugte 2,2-Dimethylpropan-1,3-diol werden in einer Konzentration von 0,1 bis 20 Gew.%, vorzugsweise 0,2 bis 10 Gew.%, bezogen auf den Portlandzementgehalt des Baustoffes eingesetzt. Prinzipiell wären auch größere Einsatzmengen möglich, doch ist dann zu befürchten, daß der Zement nur noch unvollkommen abbindet und seine Festigkeit nicht erreicht.

Die Zugabe der erfindungsgemäß verwendeten Alkandiole zum Baustoff ist absolut unkritisch. Man kann sie vor der Zugabe im Anmachwasser lösen, oder dem trockenen Baustoff zumischen oder in Kombination mit anderen Zusatzmitteln wie Kunststoffdispersionen, Dispersionspulvern, Zementverflüssigern, Entschäumern, Luftporenbildnern, Wasserrückhaltemitteln, Beschleunigern, Retardern, Verdicker oder Kombinationen davon, in den Baustoff einbringen. Wichtig ist nur, daß die Verbindungen beim Anmischen des hydraulisch erhärtenden Baustoffes mit dem Portland-Zement in Kontakt kommen, solange die Erhärtungsreaktion des Zements noch nicht voll eingesetzt hat, und die angerührte Masse noch verarbeitbar ist. Die eben aufgezählten Modifizierungsmittel für Zemente sind dem Fachmann bekannt und werden hier nicht näher beschrieben. Eine Übersicht findet man in V.S. Rachmandran, Concrete Admixtures Handbook, Noyes Publications.

Die nachfolgenden Beispiele, die die Erfindung nicht beschränken sollen, zeigen den positiven Einfluß der erfindungsgemäß verwendeten Alkandiole auf das Schwinden von Baustoffen auf der Basis von Portland-Zement.

Beispiele 1 - 9

Es werden Mörtelprismen nach DIN 1164 hergestellt. Dazu wird eine Mischung aus 25 Gew.-Teilen Portland-Zement 35 F und 75 Gew.-Teilen Normsand benutzt. Bei der Herstellung werden die jeweiligen in der Tabelle angegebenen Gew.% der Additive zugefügt. Die Anmachwassermenge (WZ = Wasserzement-Faktor = Gewichtsverhältnis von Wasser zu Zement) ist ebenfalls in der Tabelle angegeben. Die Schwindung wird nach DIN 52450 an 160x40x40 mm Prismen gemessen. Das Schwindmaß wird in mm/m = Promille (o/oo) angegeben. Die Ausschalung der Prüfkörper erfolgte jeweils 1 Tag nach Füllung der Schalung.

Tabelle

| Bsp. | Alkandiol | Gew.%* | Additiv | Gew.%* | Wz | Schwindmaß (o/oo) 28 Tge Normklima |
|---|---|---|---|---|---|---|
| 1 | – | – | – | – | 0,5 | 0,92 |
| 2 | 2.2.Dimethylpropan-1.3-diol | 2 | – | – | 0,5 | 0,51 |
| 3 | " | 1 | – | – | 0,5 | 0,78 |
| 4 | " | 0,5 | – | – | 0,5 | 0,85 |
| 5 | " | 4 | Vinnapas RE 543① | 15 | 0,5 | 0,43 |
| 6 | " | 4 | " | 15 | 0,5 | 0,43 |
| 7 | " | 2 | Agitan VP 803③ | 1.2 | 0,5 | 0,53 |
| 8 | " | 2 | Vinnapas LL518② | 15 | 0,5 | 0,68 |
| 9 | Octan-1.8-diol | 4 | Melment F 10④ | 2 | 0,5 | 0,58 |

* bezogen auf den Zementanteil

1 Copolymeres E/VAc-Dispersionspulver, Handelsprodukt der Fa. Wacker-Chemie GmbH, München

2 Wäßrige VCE/VL-Copolymer-Dispersion, Handelsprodukt der Fa. Wacker-Chemie GmbH, München

3 Pulverförmiger Entschäumer der Fa. Münzing, Heilbronn

4 Zementverflüssiger der Fa. SKW, Trostberg

**Patentansprüche**

1. Verwendung von Alkandiolen mit endständigen OH-Gruppen der allgemeinen Formel $C_nH_{2n}(OH)_2$, mit $5 \leq n \leq 10$, in Mengen von 0,1 bis 20 Gew.%, bezogen auf den Portlandzementanteil, als Zusatzmittel zur Verminderung des Schwindens von Portlandzement enthaltenden Baustoffen.

2. Verwendung nach Anspruch 1, dadurch gekennzeichnet, daß als Alkandiol 2,2-Dimethylpropan-1,3-diol eingesetzt wird.

3. Verwendung nach Anspruch 1 oder 2, dadurch gekennzeichnet, daß die Alkandiole in Mengen von 0,2 bis 10 Gew.%, bezogen auf den Portlandzementanteil, dem Baustoff zugegeben werden.

4. Verwendung nach Anspruch 1, 2 oder 3, dadurch gekennzeichnet, daß die Alkandiole zusammen mit Kunststoffdispersionen, Dispersionspulver, Zementverflüssiger, Entschäumer, Luftporenbildner, Wasserrückhaltemittel, Beschleunigern, Retardern, Verdickern oder Kombinationen davon dem Baustoff zugegeben werden.

**Claims**

1. Use of alkanediols containing terminal OH-groups, of the general formula $C_nH_{2n}(OH)_2$, where $5 \leq n \leq 10$, in amounts from 0.1 to 20% by weight relative to the amount of Portland Cement, as additives for reducing the contraction of building materials containing Portland cement.

2. Use according to Claim 1, characterised in that the alkanediol employed is 2,2-dimethylpropane-1,3-diol.

3. Use according to Claim 1 or 2, characterised in that the alkanediol is added to the building material in amounts from 0.2 to 10% by weight, relative to the amount of Portland Cement.

4. Use according to Claim 1, 2 or 3, characterised in that the alkanediols are added to the building material together with plastic dispersions, dispersion powders, cement thinners, anti-foaming agents, air entrainers, water-retention agents, accelerators, retardants, thickeners or combinations thereof.

**Revendications**

1. L'emploi d'alcane-diols à groupes hydroxyliques terminaux de formule générale $C_nH_{2n}(OH)_2$, avec $5 \leq n \leq 10$, dans des proportions de 0,1 à 20 % poids de la quantité de ciment Portland, comme additifs pour diminuer le retrait de matériaux de construction comprenant du ciment Portland.

2. Emploi selon la revendication 1 caractérisé en ce que l'alcane-diol est le 2,2-diméthylpropane-1,3-diol.

3. Emploi selon la revendication 1 ou 2, caractérisé en ce que l'on ajoute les alcane-diols au matériau de construction dans des proportions de 0,2 à 10 % du poids du ciment Portland présent.

4. Emploi selon la revendication 1, 2 ou 3, caractérisé en ce que l'on ajoute les alcane-diols au matériau de construction associés à des dispersions de matières plastiques, des poudres à disperser, fluidifiants de ciments, démoussants, formateurs de pores d'air, produits pour retenir l'eau, accélérateurs ou retardateurs, épaississants ou plusieurs de ces matières à la fois.